# EUROPEAN PATENT SPECIFICATION

(11) **EP 4 484 154 B1**
(45) Date of publication and mention of the grant of the patent: **21.01.2026**
(21) Application number: 24184513.0
(22) Date of filing: 26.06.2024
(51) Int. Cl.: B32B 5/02, B32B 5/26, B32B 7/12, B32B 27/36, D04H 1/4374

(54) **GARMENT FABRIC AND GARMENT FABRIC MANUFACTURING METHOD**
KLEIDUNGSSTOFF UND HERSTELLUNGSVERFAHREN FÜR KLEIDUNGSSTOFF
TISSU DE VÊTEMENT ET PROCÉDÉ DE FABRICATION DE TISSU DE VÊTEMENT

(30) Priority: 28.06.2023 JP 2023105806
(43) Date of publication of application: 01.01.2025
(73) Proprietor: Seiko Epson Corporation, Tokyo 160-8801 (JP)
(72) Inventor: MIYAJIMA, Yoshitaka, Suwa-shi, Nagano 392-8502 (JP); SASAKI, Tsuneyuki, Suwa-shi, Nagano 392-8502 (JP); SONOYAMA, Takuya, Suwa-shi, Nagano 392-8502 (JP); IGARASHI, Hitoshi, Suwa-shi, Nagano 392-8502 (JP)
(74) Representative: MERH-IP Matias Erny Reichl Hoffmann Patentanwälte PartG mbB

(56) References cited:
- JP-A- 2001 277 404
- JP-A- H03 220 308

## Description

### BACKGROUND

### 1. Technical Field

The present disclosure relates to a garment fabric and a garment fabric manufacturing method.

### 2. Related Art

In a related art, a nonwoven fabric has been known. For example, JP-A-2022-157261 discloses a mask made from a nonwoven fabric.

However, the nonwoven fabric described in JP-A-2022-157261 has a problem that it is difficult to achieve both thinness and strength when used for a garment. Specifically, there is a possibility of tearing due to insufficient strength when processed into a garment and worn. In addition, when a fabric is thickened to improve strength, flexibility of the fabric is reduced, and touch and feel are sometimes impaired. That is, there has been a demand for a garment fabric made of a nonwoven fabric having both thinness and strength.
Document JP-A-2001-277404 relates to a molded car interior finish ceiling material comprising a base material and a skin material. The base material is formed by fusing three layers: an upper layer made of nonwoven fabric composed of a hot-melt resin, an intermediate layer consisting of a wet nonwoven fabric comprising vegetable fiber, low-melting-point synthetic fiber, fire-retardant low-melting-point synthetic fiber, and raw polyester fiber, and a lower layer made of fire-retardant fiber nonwoven fabric. The layers are fused by melting the low-melting-point synthetic fiber in the intermediate layer. The skin material, composed of raw polyester fiber, is integrally bonded to the base material through the melting of the upper layer.
Document JPH03220308A relates to a conjugate synthetic resin film composed of three layers, with a polypropylene layer sandwiched between polyethylene layers on both sides.

### SUMMARY

A garment fabric includes a multilayer structure including a first layer having breathability and a second layer formed by mixing a treatment agent with a defibrated fiber, wherein the second layer is a nonwoven fabric.

A garment fabric manufacturing method includes a defibrating step of defibrating a cloth using a dry method to produce a fiber; a mixing step of mixing a treatment agent with the fiber to produce a mixture; a depositing step of depositing, through air, the mixture on a fabric having breathability serving as a first layer to produce a web serving as a second layer; and a forming step of forming the fabric and the web by pressurization and heating, wherein the second layer is formed by depositing, through air, a mixture containing the defibrated fiber and the treatment agent on the first layer, and wherein the second layer (L2) is a nonwoven fabric and a basis weight of the second layer (L2) is 100 g/m2 or more and 180 g/m2 or less.

### BRIEF DESCRIPTION OF THE DRAWINGS

FIG. 1 is a schematic cross-sectional view showing a configuration of a garment fabric according to an embodiment.
FIG. 2 is a flow diagram showing a garment fabric manufacturing method.
FIG. 3 is a schematic diagram showing a configuration of a fabric manufacturing device used for manufacturing the garment fabric.
Fig. 4 is a table showing manufacturing conditions and evaluation results of garment fabrics according to working examples and comparative examples.

### DESCRIPTION OF EMBODIMENTS

In the embodiments described below, a garment fabric manufactured using a dry method and a manufacturing method for the garment fabric will be described by way of example with reference to the drawings. In the present specification, a dry method refers to a process performed in air such as the atmosphere, not in liquid such as water. The garment fabric of the present disclosure is not limited to be manufactured by a dry method.

In each of the following drawings, XYZ axes are given as coordinate axes orthogonal to each other as necessary, a direction indicated by each arrow is set as a + direction, and a direction opposite to the + direction is set as a - direction. A Z-axis is an imaginary axis along the vertical direction, and a +Z direction is an upper direction, and a -Z direction is a lower direction.

In a fabric manufacturing device 1, a front side in a transport direction of an ingredient, a web, and a garment fabric may be referred to as downstream, and a direction going back in the transport direction may be referred to as upstream. For convenience of drawings, the size of each member is different from the actual size.

### 1. Garment fabric

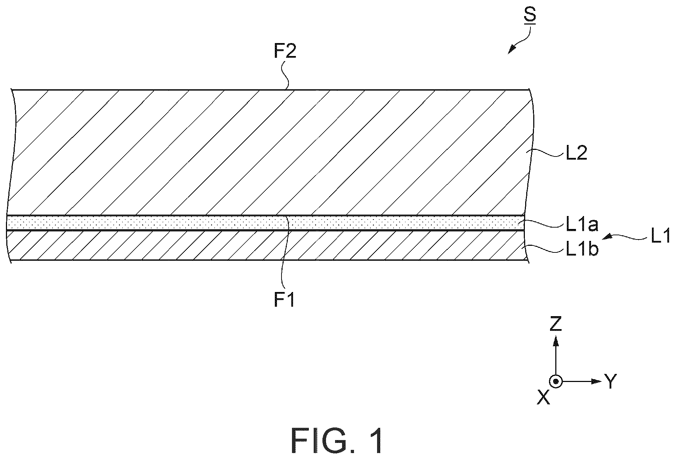

As shown in FIG. 1, a garment fabric S according to the present embodiment includes a multilayer structure including a first layer L1 and a second layer L2. The first layer L1 includes a base material layer L1b and an adhesion layer L1a. In the garment fabric S, the base material layer L1b of the first layer L1, the adhesion layer L1a of the first layer L1, and the second layer L2 are laminated in this order from a lower side to an upper side. When the garment fabric S is processed into a garment, either of the first layer L1 and the second layer L2 may be used on a surface side of the garment.

The thickness of the garment fabric S is appropriately set in accordance with the purpose and form of a garment to which the garment fabric S is applied. The thickness of the garment fabric S is not particularly limited, but is, for example, 0.30 mm or more and 1.50 mm or less. This makes it possible to improve flexibility and strength of the garment fabric S.

The first layer L1 has breathability. When the second layer L2 also has breathability, since the first layer L1 does not obstruct breathability, breathability is imparted to the garment fabric S. As a result, when the garment fabric S is used as a garment, stuffiness or the like during wearing can be suppressed.

In addition, in a manufacture of the garment fabric S, breathability of the first layer L1 can be used to promote a formation of fibers and the like, which form the second layer L2, on the first layer L1. Specifically, a formation of a web containing fibers is promoted by sucking air in which the fibers and the like are dispersed via the first layer L1. A manufacturing method and a manufacturing step of the garment fabric S will be described later in a section of a garment fabric manufacturing method.

In the present specification, breathability is defined by the air amount passing through a test piece according to JIS breathability test (L1096 2010 8.26.1 method A). In the present specification, the term "having breathability" means that the air amount determined by the above test method is equal to or more than 10 cm³/cm²·second.

The thickness of the first layer L1 is not particularly limited, but is desirably, for example, 0.01 mm or more and 0.20 mm or less. This makes it possible to improve flexibility and strength of the garment fabric S.

The base material layer L1b has breathability. The base material layer L1b serves as one surface of the garment fabric S. The second layer L2 serves as the other surface of the garment fabric S.

The base material layer L1b is a sheet such as a woven fabric, a knitted fabric, and a nonwoven fabric containing polyester. According to this, since polyester is relatively excellent in strength, the thinness and strength of the garment fabric S can be further improved.

The base material layer L1b is not limited to being made of polyester, and may be a sheet containing polyester and another resin, or may be a sheet made of a resin other than polyester.

The adhesion layer L1a is interposed between the base material layer L1b and the second layer L2. Since the first layer L1 and the second layer L2 are relatively strongly adhered by the adhesion layer L1a, it is possible to improve the peel strength between the first layer L1 and the second layer L2.

Examples of the material of the adhesion layer L1a include known adhesive materials such as polyester resin, acrylic resin, silicone resin, and urethane resin, and known adhesives such as epoxy-based, acrylic-based, cyanoacrylate-based, urethane-based, and vinyl acetate-based adhesives. In a case of using an adhesive as the adhesion layer L1a, the adhesion layer L1a may be cured by heat applied in a forming step of a manufacturing step of the garment fabric S.

The adhesion layer L1a also has breathability. Specifically, the adhesion layer L1a is formed so as not to obstruct breathability of the first layer L1. Examples of a form of the adhesion layer L1a include a form in which the above-described adhesive material, the adhesive, or the like is applied in a planar mesh shape, and a form including a plurality of holes penetrating in a direction along the Z-axis.

The adhesion layer L1a is not an essential component, and the first layer L1 may be formed of only the base material layer L1b. In this case, the first layer L1 and the second layer L2 are adhered to each other by pressurization and heating in a forming step in a manufacturing step of the garment fabric S.

The first layer L1 may be colored. When the base material layer L1b and the adhesion layer L1a are formed of the above-described material, they generally have a white color. Therefore, when the second layer L2 is colored, the color tones of the first layer L1 and the second layer L2 are relatively largely different from each other. When the garment fabric S is processed into a garment, the difference in color tone between the first layer L1 and the second layer L2 is easily conspicuous. On the other hand, when the first layer L1 is colored in a color tone close to that of the second layer L2, the difference in color tone can be made inconspicuous at the time of processing into a garment. In addition, when the first layer L1 is used so as to be on a surface side of a garment, coloring the first layer L1 in various colors improves the design.

Coloring of the first layer L1 may be performed on the above-described one surface of the garment fabric S. Coloring of the first layer L1 is not particularly limited, but a known method such as digital printing such as an inkjet method or analog printing can be applied. Coloring of the first layer L1 may be performed at a manufacturing stage of the first layer L1, or may be performed in a manufacturing step of the garment fabric S.

The second layer L2 is a nonwoven fabric formed by mixing a treatment agent such as a binding material with defibrated fibers. In the following description, defibrated fibers may be simply referred to as fibers.

The basis weight of the second layer L2 is 100 g/m² or more and 180 g/m² or less. The basis weight is the number of grams per square meter of a surface along an XY plane in one sheet of the garment fabric S. When the basis weight of the second layer L2 is within the above-described range, it is possible to secure a balance between thinness and strength in the second layer L2. Therefore, the thinness and strength of the garment fabric S can be further improved.

The basis weight of the second layer L2 is adjusted by the deposition amount of a web to be formed, that is, the thickness of the web, in a depositing step during manufacturing of the garment fabric S.

The thickness of the second layer L2 is not particularly limited, but is desirably, for example, 0.20 mm or more and 0.80 mm or less. This makes it possible to improve flexibility and strength of the garment fabric S. The thickness of the second layer L2 is adjusted not only by the thickness of the web described above, but also by the pressurization conditions of the web in a forming step during manufacturing of the garment fabric S.

When the thickness of the second layer L2 is less than the lower limit of the above-described range, unevenness is likely to occur due to thickness variation. Therefore, when the second layer L2 is used on a front surface side of a garment, the first layer L1 on a back surface may be seen through. Therefore, it is desirable to suppress the thickness variation of the second layer L2. However, the second layer L2 may include a non-uniform thickness portion.

In the second layer L2, a surface process may be performed on a first surface F1 in contact with the first layer L1 or a second surface F2 opposite to the first surface F1. A surface process can improve various physical properties such as abrasion resistance.

A surface process is not particularly limited, and examples thereof include a softening process, a water repellent process, an anti-crease process, and an anti-wear process. Known fiber treatment agents and the like can be applied to these surface processes. For example, when an anti-wear process is performed, it is possible to suppress fluffing of a surface due to rubbing of the garment and to keep the appearance of the garment favorable.

A surface process may be performed in a manufacturing step of the garment fabric S, or may be performed after the garment fabric S is manufactured. In particular, when a surface process is performed on the first surface F1, the second layer L2 and the first layer L1 are individually manufactured. Then, after the surface process is performed on the first surface F1 of the second layer L2, the first layer L1 and the second layer L2 may be adhered to each other to manufacture the garment fabric S.

Fibers are one of main components of the second layer L2 and affect physical property such as mechanical strength of a cushioning material together a binding material. Fibers obtained by defibrating a cloth are used as fibers. From the viewpoint of reusing resources, it is desirable to use an old cloth such as used clothes as the cloth.

Examples of the cloth include a knit fabric, a plain weave fabric, and a pile fabric. The cloth may also include a nonwoven fabric.

Examples of the fibers include fiber materials derived from natural products such as cotton, hemp, wool, silk, and regenerated cellulose, and synthetic fibers such as polypropylene, polyester, and polyurethane.

For the fibers, one of these types is used alone or in combination of two or more types. In particular, among the above-described fiber materials, it is desirable that the cloth contains cotton or wool from the viewpoint of easy availability of used clothes or the like, physical properties of the fibers, and the like.

The weighted average fiber length of the defibrated fiber is desirably 0.5 mm or more and 2.0 mm or less. According to this, since fibers are not excessively shortened, the fibers are moderately entangled with each other, and mechanical strength of the second layer L2 is improved. The weighted average fiber length is determined by a method conforming to ISO 16065-2:2007.

A binding material binds fibers to each other in the second layer L2. As a binding material, a thermoplastic or thermosetting resin is used. Examples of resins include natural resins such as shellac, pine resin, dammar, polylactic acid, plant-derived polybutylene succinate, plant-derived polyethylene, poly (3-hydroxybutyrate-co-3-hydroxyhexanoate) (PHBH, registered trademark) by Kaneka Corporation, or the like, in addition to synthetic resins such as polyester. As a binding material, one of these materials is used alone, or two or more of these materials are used in combination.

Examples of the treatment agent other than the binding material include a color material for coloring the second layer L2 and various additives. As a color material, known pigments and dyes can be used. Examples of additives include a flame retardant, an antioxidant, an ultraviolet absorber, an agglomeration inhibitor, an antibacterial agent, a fungicide, a wax, and a release agent.

### 2. Garment fabric manufacturing method

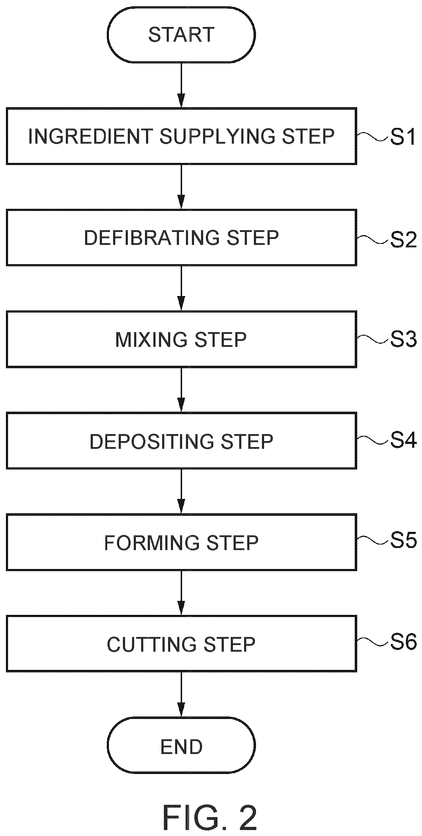

As shown in FIG. 2, the garment fabric manufacturing method according to the present embodiment includes an ingredient supplying step S1, a defibrating step S2, a mixing step S3, a depositing step S4, a forming step S5, and a cutting step S6.

In the garment fabric manufacturing method, the garment fabric S is manufactured through each step in the above order from an upstream ingredient supplying step S1 to a downstream cutting step S6. The garment fabric manufacturing method of the present disclosure includes the defibrating step S2, the mixing step S3, the depositing step S4, and the forming step S5, and other steps are not limited to the above.

A specific example of the garment fabric manufacturing method will be described together with the fabric manufacturing device 1 for manufacturing the garment fabric S. The fabric manufacturing device 1 and the garment fabric manufacturing method according to the present embodiment are merely examples, and the present disclosure is not limited thereto.

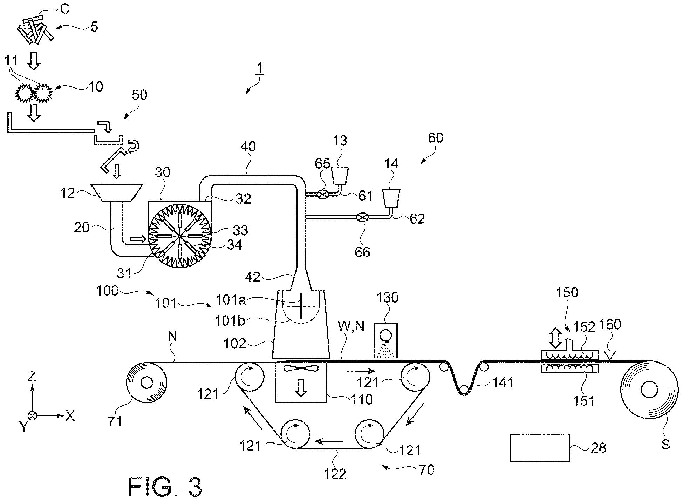

As shown in FIG. 3, the fabric manufacturing device 1 includes a supply section 5, a coarse crushing section 10, a defibrating section 30, a mixing section 60, a deposition section 100, a web transport section 70, a forming section 150, and a cutting section 160 from upstream to downstream. The fabric manufacturing device 1 is also provided with a control section 28 for integrally controlling an operation of each of the above-described components. The fabric manufacturing device 1 manufactures the garment fabric S from a cloth C.

In the supply section 5, the ingredient supplying step S1 is performed. The supply section 5 supplies an ingredient to the coarse crushing section 10. The supply section 5 includes, for example, an automatic feed mechanism (not shown), and continuously and automatically supplies the ingredient cloth C to the coarse crushing section 10. Examples of the cloth C include materials containing fibers such as old cloth.

The coarse crushing section 10 shreds the cloth C supplied from the supply section 5 into small pieces in air such as the atmosphere. The coarse crushing section 10 is a shredder, a cutter mill, or the like including coarse crushing blades 11. The cloth C is cut into small pieces by the coarse crushing blades 11. The planar shapes of small pieces are, for example, several millimeters square or irregular. Small pieces are collected in a fixed quantity supply section 50.

The fixed quantity supply section 50 measures and supplies small pieces to a hopper 12 in a fixed quantity. The fixed quantity supply section 50 is, for example, a vibrating feeder. Small pieces supplied to the hopper 12 are transported in a pipe 20 to reach an inlet 31 of the defibrating section 30.

In the defibrating section 30, the defibrating step S2 is performed. The defibrating section 30 defibrates small pieces of the cloth C using a dry method to produce fibers. The defibrating section 30 includes the inlet 31, an outlet 32, a stator 33, a rotor 34, and an airflow generation mechanism (not shown). Small pieces of the cloth C are introduced into the inside of the defibrating section 30 via the inlet 31 by airflow of the airflow generation mechanism.

The stator 33 and the rotor 34 are arranged inside the defibrating section 30. The stator 33 has a substantially cylindrical inner surface. The rotor 34 rotates along an inner surface of the stator 33. Small pieces of the cloth C are sandwiched between the stator 33 and the rotor 34, and are defibrated by the shear force generated between them.

Fibers produced by the defibrating section 30 are discharged from the outlet 32 into a pipe 40. The pipe 40 communicates with the inside of the defibrating section 30 and the inside of the deposition section 100. Fibers are transported from the defibrating section 30 to the deposition section 100 by airflow generated by the airflow generation mechanism. The mixing section 60 is arranged to the pipe 40 between the defibrating section 30 and the deposition section 100.

In the mixing section 60, the mixing step S3 is performed. The mixing section 60 includes hoppers 13 and 14, supply pipes 61 and 62, and valves 65 and 66. The mixing section 60 mixes fibers with a treatment agent in air to produce a mixture.

The hopper 13 communicates with the inside of the pipe 40 via the supply pipe 61. In the supply pipe 61, the valve 65 is provided between the hopper 13 and the pipe 40. The hopper 13 supplies a binding material into the pipe 40. The valve 65 adjusts the mass of a binding material supplied from the hopper 13 to the pipe 40. Thereby, the mixing ratio of fibers and a binding material is adjusted. A binding material may be supplied in the form of powder or particles, or may be supplied melted.

The hopper 14 communicates with the inside of the pipe 40 via the supply pipe 62. In the supply pipe 62, the valve 66 is provided between the hopper 14 and the pipe 40. The hopper 14 supplies a color material or an additive into the pipe 40. The valve 66 adjusts the mass of a color material or an additive supplied from the hopper 14 to the pipe 40. Thereby, the mixing ratio of a color material and an additive to fibers and a binding material is adjusted. A color material or an additive may be previously mixed with a binding material and supplied from the hopper 13.

Fibers, a binding material, and the like are mixed while being transported to the deposition section 100 in the pipe 40 to form a mixture. In order to promote mixture production in the pipe 40 and improve transportability of a mixture, a blower or the like that generates airflow may be arranged in the pipe 40. A mixture is introduced from the pipe 40 via a connecting section 42 to the deposition section 100.

In the deposition section 100, the depositing step S4 is performed. The deposition section 100 deposits a mixture, through air, on a fabric N having breathability to be the first layer L1 of the garment fabric S to produce a web W to be the second layer L2. In other words, the second layer L2 is formed by depositing, through air, a mixture containing defibrated fibers and a treatment agent on the fabric N to be the first layer L1. Therefore, the second layer L2 can be easily formed. Also, the basis weight can be easily changed.

The deposition section 100 includes a drum section 101, a housing section 102 for housing the drum section 101, and a fabric supply section 71 for supplying the fabric N. The deposition section 100 takes a mixture from the pipe 40 into the drum section 101. Then, a mixture is deposited on the fabric N supplied from the fabric supply section 71 using a dry method.

A web transport section 70 including a mesh belt 122 and a suction mechanism 110 is arranged below the deposition section 100. The suction mechanism 110 is arranged opposite the drum section 101 with the mesh belt 122 therebetween in a direction along the Z-axis.

The drum section 101 includes a vane member 101a which is rotationally driven by a motor (not shown) and a substantially cylindrical sieve section 101b which is arranged to mainly cover a lower part of the vane member 101a. The vane member 101a loosens entangled fibers while rotating. The sieve section 101b allows particles such as fibers and mixtures smaller than the size of openings of the mesh of the sieve to pass therethrough from the inside to the outside. As a result, entangled fibers of a mixture are loosened in the drum section 101 and dispersed in air within the housing section 102.

The fabric supply section 71 continuously feeds the rolled fabric N onto the mesh belt 122. At this time, the adhesion layer L1a of the fabric N becomes an upper surface. In a case where release paper is attached to the above-described adhesion layer L1a of the fabric N, the fabric supply section 71 may include a separation mechanism that separates the release paper from the fabric N.

A mixture containing fibers is dispersed from the inside of the sieve section 101b into air in the housing section 102. Then, a mixture containing fibers is randomly deposited on the fabric N transported on the mesh belt 122. Therefore, fibers are less likely to be oriented in a specific direction in the web W.

The sieve section 101b may not have a function of sorting large fibers or the like in a mixture. That is, the drum section 101 may loosen fibers of a mixture and release the entire mixture to the inside of the housing section 102. A mixture dispersed in air in the housing section 102 is deposited on an upper surface of the fabric N by gravity and suction force of the suction mechanism 110.

The basis weight of the garment fabric S is adjusted by the basis weights of the fabric N and the web W. The basis weight of the web W is adjusted by the number of rotations of the vane member 101a, the amount of a mixture supplied to the deposition section 100 per hour, a transport speed of the fabric N by the mesh belt 122, and the like.

The mixing ratio of fibers and a treatment agent is not particularly limited, and is appropriately adjusted in accordance with the type of the treatment agent. For example, when a binding material is used as a treatment agent, the mass ratio of fibers to a binding material in the web W is desirably in the range of 9:1 to 5:5 in terms of fiber to binding material. According to this, the balance of various physical properties of the garment fabric S can be secured.

The web transport section 70 includes the mesh belt 122 and the suction mechanism 110. The web transport section 70 promotes deposition of a mixture on the fabric N by the suction mechanism 110. The web transport section 70 transports the web W formed from a mixture downstream by rotation of the mesh belt 122.

The suction mechanism 110 is arranged below the drum section 101. The suction mechanism 110 sucks air in the housing section 102 via a plurality of holes in the mesh belt 122 and the fabric N having breathability. As a result, the mixture released to the outside of the drum section 101 is sucked downward together with air and deposited on an upper surface of the fabric N. A known suction device such as a blower is used as the suction mechanism 110.

A plurality of holes in the mesh belt 122 allow air to pass therethrough, and it is difficult for fibers, a binding material, and the like contained in a mixture to pass therethrough. The mesh belt 122 is an endless belt, which is tensioned by four tension rollers 121.

An upper surface of the mesh belt 122 moves downstream by rotation of the tension rollers 121. In other words, the mesh belt 122 rotates clockwise in FIG. 3. As the mesh belt 122 is rotated by the tension rollers 121, a mixture is continuously deposited to form the web W. The web W contains a relatively large amount of air and is soft and swollen. The web W is transported downstream together with the fabric N as the mesh belt 122 moves.

A humidifier 130 may be arranged downstream of the deposition section 100 to spray water on the web W to humidify the web W. As a result, scattering of fibers, a binding material, and the like contained in the web W is suppressed. A water-soluble treatment agent may be contained in water used for humidification, and the web W to be the second layer L2 may be subjected to a surface process in parallel with humidification.

The web W and the fabric N are transported downstream by the mesh belt 122, separated from the mesh belt 122, and drawn into a dancer roller 141. The dancer roller 141 is provided to secure the processing time of the downstream forming step S5. Specifically, since the forming step S5 following the depositing step S4 is a batch process, the dancer roller 141 is moved up and down with respect to the web W and the fabric N continuously supplied from the deposition section 100 to secure the processing time of the forming step S5. The web W and the fabric N reach the forming section 150 via the dancer roller 141.

In the forming section 150, the forming step S5 is performed. In the forming step S5, the web W is heated and pressurized together with the fabric N to form the band-shaped garment fabric S. The forming section 150 is a heating press device and includes an upper plate 152 and a lower plate 151. The upper plate 152 and the lower plate 151 sandwich and pressurize the web W and the fabric N, and heat the web W and the fabric N by a built-in heater. In the forming step S5, the forming step S5 may be continuously performed using a heating roller pair or the like.

The web W is compressed from the vertical direction by pressing to increase the density, and a binding material is melted by heating to wet and spread between fibers. When heating is completed in this state and a binding material is solidified, fibers are bonded to each other by the binding material. In addition, the fabric N and the web W are adhered to each other, the fabric N becomes the first layer L1, and the web W becomes the second layer L2.

The conditions of pressing and heating in the forming section 150 are appropriately adjusted according to the desired density of the garment fabric S, the melting point or curing temperature of a binding material, and the like. Although not particularly limited, the pressurizing condition is, for example, 0.01 MPa or more, and the heating condition is, for example, 90 °C or more. By the forming section 150, the fabric N and the web W become the band-shaped garment fabric S, and proceed to the cutting section 160.

In the cutting section 160, the cutting step S6 is performed. The cutting section 160 adjusts the shape of the sides at both ends of the band-shaped garment fabric S. The cutting section 160 includes a vertical blade (not shown).

The vertical blade cuts the band-shaped garment fabric S in a direction along a proceeding direction. As a result, the sides of both ends of the garment fabric S are cut and aligned. Then, the band-shaped garment fabric S is wound into a roll to be a tanmono (roll of fabric) . The cutting section 160 may be provided with a horizontal blade for cutting in a direction intersecting with the proceeding direction of the garment fabric S. In this case, the garment fabric S is cut into a single sheet shape such as a substantially rectangular shape. Thus, the garment fabric S is manufactured.

The garment fabric manufacturing method of the present embodiment may include, in addition to the above-described steps, a step of applying the above-described surface process to the second layer L2, a step of applying coloring to the first layer L1, and the like.

According to the present embodiment, the following effects can be obtained.

The thinness and strength of the garment fabric S can be improved. Specifically, since the second layer L2 which is a nonwoven fabric containing defibrated fibers is reinforced by the first layer L1, the strength is improved. Therefore, it is possible to reduce the thickness of the garment fabric S while securing the strength thereof. Therefore, it is possible to provide the garment fabric S having both thinness and strength, and a garment fabric manufacturing method.

### 3. Working examples and comparative examples

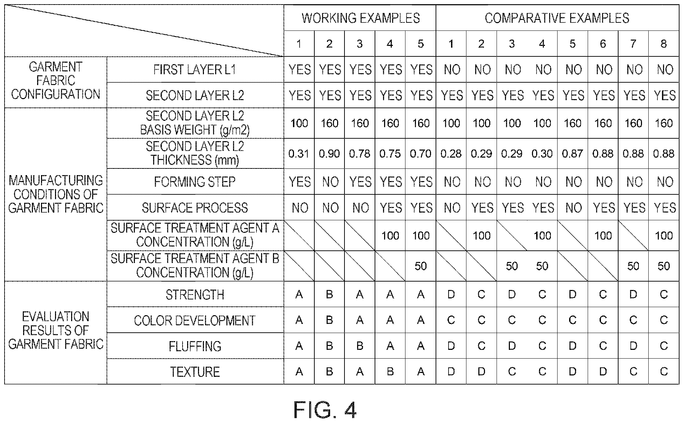

Hereinafter, the effects of the present disclosure will be described more specifically with reference to working examples and comparative examples. FIG. 4 shows the layer configuration, the manufacturing conditions, and the evaluation results of the garment fabrics S of first to fifth working examples and the garment fabrics of first to eighth comparative examples. In the following description, first to fifth working examples may be collectively and simply referred to as working examples, and first to eighth comparative examples may be collectively and simply referred to as comparative examples. The present disclosure is not limited to the following working examples.

### 3.1. Preparation of test pieces for evaluating garment fabrics

As shown in FIG. 4, in the first working example, a blended fabric made of cotton and polyester was used as the cloth C of an ingredient of fibers. Specifically, as the ingredient supplying step S1, knit fabrics was coarsely crushed into substantially rectangular pieces having a long side of 1 mm to 30 mm by a cutter mill of MAKINO mfg. co. ltd. Next, as the defibrating step S2, the pieces were defibrated into fibers in the same manner as the defibrating step S2 of the above embodiment.

Next, as the mixing step S3, a mixture of fibers and binding materials was produced by air stirring at a mass ratio of 10:3. Thereafter, as the depositing step S4, the mixture was deposited on the fabric N through air to form the web W. At this time, the deposition amount of the mixture was adjusted so that the basis weight of the second layer L2 was 100 g/m². As the fabric N, a polyester nonwoven fabric having a thickness of 0.1 mm was used. A thermoplastic resin was used as a binding material.

Next, as the forming step S5, the web W and the fabric N were subjected to heat pressing. At this time, AF-54TEN (product name) manufactured by ITSUMI Corporation was used as a heating press machine, and the heating conditions were set at 150 °C for 1 minute, so that the thickness of the second layer L2 in the garment fabric S was 0.31 mm, whereby the garment fabric S of first working example was manufactured under the pressurization conditions. The second layer L2 of the first working example was not subjected to a surface process. Then, in the cutting step S6, the garment fabric S was cut into pieces with a length of 250 mm and a width of 100 mm using a cutter to obtain test pieces for evaluation.

In the second working example, the basis weight of the second layer L2 was set to 160 g/m², and the thickness of the second layer L2 was set to 0.90 mm with respect to the first working example. A test piece was produced in the same manner as in the first working example, except that the first layer L1 and the second layer L2 were adhered by hand without performing the forming step S5.

In the third working example, a test piece was produced in the same manner as in the first working example except that the basis weight of the second layer L2 was set to 160 g/m² and the thickness of the second layer L2 was set to 0.78 mm with respect to the first working example.

In the fourth working example, with respect to the first working example, the basis weight of the second layer L2 was set to 160 g/m², and the thickness of the second layer L2 was set to 0.75 mm. Further, the web W was formed alone without being formed on the fabric N, and after a surface process was performed, the forming step S5 was performed. As a surface process, an anti-wear process with a surface treatment agent A was performed.

Specifically, as the surface treatment agent A, OXAL-HX (product name, blocked isocyanate crosslinking agent) manufactured by Epson Como Printing Technologies S.r.l. was used. The surface treatment agent A was prepared in an aqueous solution having a concentration of 100 g/L. Then, as a surface process, the web W was impregnated with the above solution using a padder as an impregnation device. Thereafter, it was dried at 160 °C for 3 minutes. In this case, as a surface process, both surfaces of the first surface F1 and the second surface F2 of the second layer L2 are subjected to the surface process. A test piece was produced in the same manner as in the first working example except for the above.

In the fifth working example, the thickness of the second layer L2 was set to 0.70 mm with respect to the fourth working example, and after an anti-wear process was performed, a softening process with a surface treatment agent B was performed as an additional surface process. A test piece was produced in the same manner as in the fourth working example except for the above.

In the softening process, FORDEEP SOF (product name, silicone softening agent) manufactured by Epson Como Printing Technologies S.r.l. was used as a surface treatment agent B. The surface treatment agent B was prepared in an aqueous solution having a concentration of 50 g/L. Then, as a surface process, the web W was impregnated with the above solution using a padder as an impregnation device. Thereafter, it was dried at 160 °C for 3 minutes. In this case, as an additional surface process, both surfaces of the first surface F1 and the second surface F2 of the second layer L2 are subjected to the above surface process.

In a garment fabric of comparative examples, the fabric N to be the first layer L1 was omitted, and the forming step S5 was not performed. Specifically, in the first comparative example, the basis weight of the second layer L2 was set to 100 g/m² and the thickness of the second layer L2 was set to 0.28 mm with respect to the second working example, and the forming step S5 was omitted. A test piece was produced in the same manner as in the second working example except for the above.

In the second comparative example, the first layer L1 was omitted, the basis weight of the second layer L2 was set to 100 g/m², and the thickness of the second layer L2 was set to 0.29 mm with respect to the fourth working example. A test piece was produced in the same manner as in the fourth working example except for the above.

In the third comparative example, a test piece was produced in the same manner as in the second comparative example, except that the softening process in the same manner as in the fifth working example was performed alone instead of the anti-wear process.

In the fourth comparative example, a test piece was produced in the same manner as in the second comparative example, except that the thickness of the second layer L2 was 0.30 mm, and both the anti-wear process and the softening process were performed in the same manner as in the fifth working example.

In the fifth comparative example, a test piece was produced in the same manner as in the first comparative example, except that the basis weight of the second layer L2 was set to 160 g/m² and the thickness of the second layer L2 was set to 0.87 mm.

In the sixth comparative example, a test piece was produced in the same manner as in the second comparative example, except that the basis weight of the second layer L2 was set to 160 g/m² and the thickness of the second layer L2 was set to 0.88 mm.

In the seventh comparative example, a test piece was produced in the same manner as in the third comparative example, except that the basis weight of the second layer L2 was set to 160 g/m² and the thickness of the second layer L2 was set to 0.88 mm.

In the eighth comparative example, a test piece was produced in the same manner as in the fourth comparative example, except that the basis weight of the second layer L2 was set to 160 g/m² and the thickness of the second layer L2 was set to 0.88 mm.

### 3. 2. Evaluation of garment fabric

Test pieces of working examples and comparative examples were evaluated for strength, color development, fluffing, and texture. Evaluation results of each level are shown in FIG. 4.

### 3. 2. 1. Evaluation of strength

The strength was evaluated by the following procedure. Both ends of the test piece in the longitudinal direction were held in each hand, and the areas held in each hand were overlapped, and then rubbed together for 3 minutes. At this time, surfaces to be rubbed against each other were surfaces of the second layer L2. Thereafter, the presence or absence of the occurrence of tearing was confirmed for each test piece, and evaluated according to the following determination reference. When tearing occurred during a rubbing operation, the time when the tearing occurred was recorded, and the subsequent rubbing operation was stopped.

### Evaluation reference

A: Even after the rubbing operation for 3 minutes, no tearing occurred.
B: When the rubbing operation was performed for 2 minutes or more and less than 3 minutes, tearing occurred.
C: When the rubbing operation was performed for 1 minute or more and less than 2 minutes, tearing occurred.
D: Tearing occurred after rubbing operation for less than 1 minute.

### 3. 2. 2. Evaluation of color development

For the evaluation of color development, a surface of the second layer L2 of each test piece was printed with a black ink using a commercially available textile inkjet printer (pigment ink), and print quality was visually evaluated. Specifically, Monna Lisa (registered trademark) Evo Tre16 manufactured by Seiko Epson Corporation was used as a textile inkjet printer to perform solid printing (print duty:100%) with a single color of black on almost the entire surface of the second layer L2 of the test piece. After ink was dried, evaluation was performed according to the following determination reference.
A: There was no print unevenness, and good color development was obtained over the entire print region.
B: Although print unevenness was partially observed, color development with no practical problem was obtained.
C: Print unevenness was observed in various places, and color development suitable for practical use was not obtained.

### 3. 2. 3. Evaluation of fluffing

Each test piece was performed to a rubbing operation in the same manner as in the above-described evaluation of strength. At this time, the rubbing operation was interrupted every 10 seconds, and the degree of fluffing of a rubbed test piece surface was observed each time. The rubbing evaluation was stopped when fluffing occurred, and the cumulative rubbing time at that point was recorded. When fluffing did not occur, the rubbing operation was performed until the cumulative rubbing time reached 2 minutes. The time at which fluffing occurred and the presence or absence of fluffing were evaluated according to the following determination reference.
A: Even when rubbing was performed for more than 1 minute and 2 minutes or less, fluffing did not occur.
B: Fluffing occurred after rubbing for more than 20 seconds and 1 minute or less.
C: Fluffing occurred after rubbing for more than 10 seconds and 20 seconds or less.
D: Fluffing occurred after rubbing for 10 seconds or less.

### 3. 2. 4. Evaluation of texture

As an evaluation of texture, a sensory evaluation of touch was performed. Specifically, 50 evaluators were allowed to touch each test piece with their hands, and the quality of the touch was totaled. The counting results were evaluated according to the following determination reference.
A: 95% or more of all the evaluators evaluated that the touch was good.
B: 80% or more and less than 95% of all the evaluators evaluated that the touch was good.
C: 40% or more and less than 80% of all the evaluators evaluated that the touch was good.
D: Less than 40% of all the evaluators evaluated that the touch was good.

### 3. 3. Wrap-up of evaluation results

As shown in FIG. 4, in the evaluation of strength, working examples were evaluated as determination A or determination B at all levels. On the other hand, comparative examples were evaluated as determination C or determination D at all levels. Specifically, the thickness of the second layer L2 is close to each other in the first working example and the first to fourth comparative examples, and in the second to fifth working examples and the fifth to eighth comparative examples. Even when these thicknesses are compared with each other close to each other, the improvement in strength is remarkable in the working examples as compared with the comparative examples. In particular, in the first working example, although the thickness of the second layer L2 was 0.31 mm, which was relatively thin, the evaluation was determination A. From the above, it was shown that the test pieces of the working examples had both thinness and strength.

In the evaluation of color development, the working examples were evaluated determination A or determination B at all levels, and the comparative examples were evaluated determination C at all levels. In the evaluation of fluffing, the working examples were evaluated determination A or determination B at all levels, and the comparative examples were evaluated determination C or determination D at all levels.

In the evaluation of texture, the working examples were evaluated determination A or determination B at all levels, and the comparative examples were evaluated determination C or determination D at all levels. In particular, it was shown that the second to fifth working examples had good texture, even though the thickness of the second layer L2 was close to that of the fifth to eighth comparative examples.

From the above, it was shown that the test pieces of working examples were superior to the test pieces of comparative examples in color development, resistance to fluffing, and texture.

## Claims

1. A garment fabric (S) comprising:
a multilayer structure including a first layer (L1) having breathability of equal to or more than 10 cm3/cm2·second and measured according to JIS breathability test (L1096 2010 8.26.1 method A) and a second layer (L2) formed by mixing a treatment agent with a defibrated fiber, wherein
the second layer (L2) is a nonwoven fabric and
a basis weight of the second layer (L2) is 100 g/m² or more and 180 g/m² or less.

2. The garment fabric (S) according to claim 1, wherein
the second layer (L2) is formed by depositing, through air, a mixture containing the defibrated fiber and the treatment agent on the first layer (L1).

3. The garment fabric (S) according to claim 1, wherein
the first layer (L1) includes a base material layer (L1b) and an adhesion layer (L1a) interposed between the base material layer (L1b) and the second layer (L2).

4. The garment fabric (S) according to claim 3, wherein
the base material layer (L1b) contains polyester.

5. The garment fabric (S) according to claim 1, wherein
the first layer (L1) is colored.

6. The garment fabric (S) according to claim 1, wherein
in the second layer (L2), a first surface (F1) in contact with the first layer (L1) or a second surface (F2) opposite to the first surface (F1) is subjected to a surface process.

7. The garment fabric (S) according to claim 1, wherein
a weighted average fiber length of the defibrated fiber is 0.5 mm or more and 2.0 mm or less.

8. Method for manufacturing a garment fabric (S) according to claim 1 comprising:
a defibrating step of defibrating a cloth using a dry method to produce a fiber;
a mixing step of mixing a treatment agent (A) with the fiber to produce a mixture;
a depositing step of depositing, through air, the mixture on a fabric having breathability serving as a first layer (L1) to produce a web serving as a second layer (L2); and
a forming step of forming the fabric and the web by pressurization and heating, wherein the second layer (L2) is a nonwoven fabric and a basis weight of the second layer (L2) is 100 g/m² or more and 180 g/m² or less.

## Patentansprüche

1. Kleidungsstoff (S), umfassend:
eine mehrschichtige Struktur, die eine erste Schicht (L1) mit Atmungsfähigkeit gleich oder größer als 10 cm³/cm²·Sekunde und gemessen nach JIS Atmungsfähigkeitstest (L1096 2010 8.26.1 Methode A) und eine zweite Schicht (L2), die durch Mischen eines Behandlungsmittels mit einer zerfaserten Faser gebildet wird, enthält, wobei
die zweite Schicht (L2) ein Vliesgewebe ist und
ein Flächengewicht der zweiten Schicht (L2) 100 g/m² oder mehr und 180 g/m² oder weniger beträgt.

2. Kleidungsstoff (S) nach Anspruch 1, wobei
die zweite Schicht (L2) durch Ablegen, mittels Luft, einer Mischung, die die zerfaserte Faser und ein Behandlungsmittel beinhaltet, auf der ersten Schicht (L1) gebildet wird.

3. Kleidungsstoff (S) nach Anspruch 1, wobei
die erste Schicht (L1) eine Basismaterialschicht (L1b) und eine Haftschicht (L1a), die zwischen der Basismaterialschicht (L1b) und der zweiten Schicht (L2) eingefügt ist, enthält.

4. Kleidungsstoff (S) nach Anspruch 3, wobei
die Basismaterialschicht (L1b) Polyester beinhaltet.

5. Kleidungsstoff (S) nach Anspruch 1, wobei
die erste Schicht (L1) farbig ist.

6. Kleidungsstoff (S) nach Anspruch 1, wobei
in der zweiten Schicht (L2) eine erste Oberfläche (F1) in Kontakt mit der ersten Schicht (L1) oder eine zweite Oberfläche (F2) entgegengesetzt zu der ersten Oberfläche (F1) einem Oberflächenprozess unterzogen wird.

7. Kleidungsstoff (S) nach Anspruch 1, wobei
eine gewichtsgemittelte Faserlänge der zerfaserten Faser 0,5 mm oder mehr und 2,0 mm oder weniger beträgt.

8. Herstellungsverfahren für einen Kleidungsstoff (S) nach Anspruch 1, umfassend:
einen Zerfaserungsschritt zum Zerfasern eines Tuchs unter Verwendung eines Trockenverfahrens zum Erzeugen einer Faser;
einen Mischschritt zum Mischen eines Behandlungsmittels (A) mit der Faser zum Erzeugen einer Mischung;
einen Ablageschritt zum Ablegen, mittels Luft, der Mischung auf einem Stoff mit Atmungsfähigkeit, der als eine erste Schicht (L1) dient, um eine Bahn zu erzeugen, die als eine zweite Schicht (L2) dient;
einen Formungsschritt zum Formen des Stoffs und der Bahn durch Druckbeaufschlagen und Erhitzen, wobei die zweite Schicht (L2) ein Vliesgewebe ist und ein Flächengewicht der zweiten Schicht (L2) 100 g/m² oder mehr und 180 g/m² oder weniger beträgt.

## Revendications

1. Tissu de vêtement (S) comprenant :
une structure multicouche incluant une première couche (L1) présentant une respirabilité égale ou supérieure à 10 cm³/cm² par seconde et mesurée conformément au test de respirabilité JIS (L1096 2010 8.26.1 Procédé A) et une deuxième couche (L2) formée en mélangeant un agent de traitement avec une fibre défibrée, dans lequel
la deuxième couche (L2) est un tissu non tissé et
un poids de base de la deuxième couche (L2) est de 100 g/m² ou plus et de 180 g/m² ou moins.

2. Tissu de vêtement (S) selon la revendication 1, dans lequel
la deuxième couche (L2) est formée en déposant, via l'air, un mélange contenant la fibre défibrée et l'agent de traitement sur la première couche (L1).

3. Tissu de vêtement (S) selon la revendication 1, dans lequel
la première couche (L1) inclut une couche de matériau de base (L1b) et une couche d'adhésion (L1a) interposée entre la couche de matériau de base (L1b) et la deuxième couche (L2).

4. Tissu de vêtement (S) selon la revendication 3, dans lequel
la couche de matériau de base (L1b) contient du polyester.

5. Tissu de vêtement (S) selon la revendication 1, dans lequel
la première couche (L1) est colorée.

6. Tissu de vêtement (S) selon la revendication 1, dans lequel
dans la deuxième couche (L2), une première surface (F1) en contact avec la première couche (L1) ou une deuxième surface (F2) opposée à la première surface (F1) est soumise à un traitement de surface.

7. Tissu de vêtement (S) selon la revendication 1, dans lequel
une longueur de fibre moyenne pondérée de la fibre défibrée est de 0,5 mm ou plus et de 2,0 mm ou moins.

8. Procédé de fabrication d'un tissu de vêtement (S) selon la revendication 1, comprenant :
une étape de défibrage pour le défibrage d'une étoffe à l'aide d'un procédé à sec pour produire un mélange ;
un étape de mélange pour le mélange d'un agent de traitement (A) avec la fibre afin de produire un mélange ;
un étape de dépôt pour le dépôt, via l'air, du mélange sur un tissu présentant une respirabilité servant de première couche (L1) afin de produire une toile servant de deuxième couche (L2) ; et
une étape de formation pour la formation du tissu et de la toile par pressurisation et chauffage, dans lequel la deuxième couche (L2) est un tissu non tissé et un poids de base de la deuxième couche (L2) est de 100 g/m² ou plus et de 180 g/m² ou moins.
